# EUROPEAN PATENT APPLICATION

(11) **EP 4 417 680 A1**
(43) Date of publication of application: **21.08.2024**
(21) Application number: 23156790.0
(22) Date of filing: 15.02.2023
(51) Int. Cl.: C12G 1/02, B65D 8/00, B65D 6/00, B65D 81/20, B65D 81/24, C12H 1/22, C12L 9/00

(54) **A BARREL FOR FERMENTING FOODS OR BEVERAGES IN A CONTROLLED ATMOSPHERE**

(71) Applicant: Gantenbrink, Bruno Alexander, 58708 Menden (DE); Popa, Vitalie, 6811 Bardar, Ialoveni (MD)
(72) Inventor: Gantenbrink, Bruno Alexander, 58708 Menden (DE); Popa, Vitalie, 6811 Bardar, Ialoveni (MD)
(74) Representative: DTS Patent- und Rechtsanwälte PartmbB

(57) **Abstract**

A barrel (100, 200) for fermenting foods or beverages in a controlled atmosphere and in the absence of additives and preservatives. The barrel (100) comprising a container including a barrel body (102), a barrel bottom plate (104) and a barrel top plate (106), wherein the barrel body (102) comprises a plurality of staves (110) and is connected along a longitudinal axis (101) to the barrel bottom plate (104) and the barrel top plate (106) in a sealing manner, a device (108) connected to the container in a sealing manner, wherein the device (108) is configured to control the pressure inside the barrel and to pressurize, respectively depressurize, the barrel; retaining elements (112) arranged around the barrel body (102) along the longitudinal axis (101), wherein each of the retaining elements (112) are configured to be adjusted; first sealing elements arranged between the barrel body (102) and the barrel bottom and top plates (104, 106), wherein the barrel top plate (106) comprises a window (128) for exposing light into the barrel (100); and second sealing elements (126) arranged between every two neighboring staves of the plurality of staves (110) of the barrel body (102).

## Description

The present invention relates to a barrel for fermenting foods or beverages in a controlled atmosphere and in the absence of additives and preservatives, and to a method of manufacturing the same.

Fermentation is a process in which microorganisms such as yeasts and bacteria convert sugars into alcohol or organic acids. This process is used to produce a wide variety of foods and beverages, including beer, wine, cheese, yogurt, and sourdough bread.

The use of wooden barrels for fermentation has been a traditional method for centuries. The wooden barrels typically comprise a bung inserted in a bung hole. These barrels provide a natural environment for fermentation, which can impart unique flavors to the fermented contents. However, the traditional wooden barrels are prone to leaks, evaporation and oxidation of the fermented content within the barrels.

There are several complex transfer phenomena taking place in the wooden barrels which depend on the intrinsic physical and chemical properties of the wood used in making the barrels. For instance, various flavors are imparted to the fermented contents by selecting a specific type of the wood.

It is known that, for example, the amount of oxygen present in the wooden barrels is directly influencing the fermentation and/or aging processes. In this respect, the porosity of the wood, the humidity of the wood and the construction of the barrels, e.g. the connections between the staves, can play important roles in the dynamics of the oxygen transfer into the barrels.

Therefore, for example in the wine-making processes, the wooden barrel is seen as an active vessel reacting with the wine (Alamo-Sanza, Critical Reviews In Food Science And Nutrition, Vol. 58, No 16, 2711-2726, 2019). On the one hand, the barrel allows the transfer of substances from the wood into the wine and, on the other hand, influences the oxygen transfer from the air to the wine during one year of aging.

When using the standard wooden barrels with, for example, a silicon bung, these barrels may be under undesired positive or negative pressures during the winemaking or aging process because of the environmental parameters (such as temperature and humidity) and the evaporation of the liquid content inside the barrel.

To date, however, there have been little studies on how to improve the barrel making processes for better controlling of the evaporation and oxygen transfer, and for generating and maintaining a desired positive/negative pressure in the barrel.

Accordingly, when fermenting or aging wine, beer, cider, spirits or other food or beverages in the standard wooden barrels or when collecting tasting or laboratory samples, oxidation and product losses occur, particularly through evaporation of liquid from the barrel and entering air into the barrel.

In addition, conventional wine-making processes are technological processes that are strictly regulated by law. The Regulation EU 2019/934 lays down rules concerning wine-growing areas where the alcoholic strength may be increased, authorised oenological practices and restrictions applicable to the production and conservation of grapevine products, and the minimum percentage of alcohol for by-products and their disposal, and publication of OIV (the International Organisations of Vine and Wine) files. The oenological processes include physical processes, additives and processing aids used in the processing of raw material. Increasing public awareness of the link between food and health and the negative impact of traditional food production methods on environmental resources has led consumers to be more selective and pay more attention to the ingredients and constituents used in the foods and beverages they eat and drink in their daily lives (Asioli et al. Food Research International, 99 (1). pp. 58-71, 2017).

In the wine industry, the production of "natural wines" is generally aimed at reducing or eliminating additives and processing aids. In particular, the use of sulfur dioxide (SO₂) is critically questioned, but only a few production methods are known to produce wines without using SO₂.

It is therefore an object of the present invention to address the above issues in the construction of the standard barrels and facilities a sustainable winemaking process (e.g. without the use of sulfur dioxide and without additives and processing aids) which is also time and cost effective.

This object is achieved in the present invention by a barrel according to claim 1. Accordingly, a barrel for fermenting foods or beverages in a controlled atmosphere and in the absence of additives and preservatives, the barrel comprising:
- a container including a barrel body, a barrel bottom plate and a barrel top plate, wherein the barrel body comprises a plurality of staves and is connected along a longitudinal axis to a barrel bottom plate (at one end) and a barrel top plate (at an opposite end) in a sealing manner;
- a device connected to the container in a sealing manner, wherein the device is configured to control the pressure inside the barrel and to pressurize, respectively depressurize, the barrel;
- retaining elements arranged around the barrel body along the longitudinal axis, wherein each of the retaining elements are configured to be adjusted;
- first sealing elements arranged between the barrel body and the barrel bottom and top plates, wherein the barrel top plate comprises a window for exposing light into the barrel; and
- second sealing elements (arranged between every two neighboring staves of the plurality of staves of the barrel body.

The invention is based on the basic idea that a barrel for fermenting foods or beverages is provided which facilitates fermenting and/or aging fermentable foods or beverages in a controlled atmosphere, continues pressure and in the absence of additives and preservatives. The barrel comprises a (sealed) container including a barrel body, a barrel bottom plate and a barrel top plate, wherein the barrel body comprises a plurality of staves. A device is included in the barrel for controlling the pressure inside the container and for pressurizing, respectively depressurizing, the barrel. The barrel body is connected at one end to a barrel bottom plate in a sealing manner and at an opposite end to a barrel top plate in a sealing manner. The device is removably inserted in an opening formed in the barrel body or in the barrel bottom plate. The device is connected to the barrel in a sealing manner. The barrel body comprises a plurality of staves that are held together by retaining elements, wherein the retaining elements are configured to be adjusted for tightening, respectively loosening, the retaining elements. First sealing elements are arranged between the barrel body and the barrel bottom and top plates. Further second sealing elements are arranged between two neighboring staves of the plurality of staves of the barrel body. The barrel top plate comprises a window for exposing light into the barrel.

In particular, the inventors have realized that there are several construction drawbacks in the known standard wooden barrels that adversely influence the fermentation and/or aging processes due to undesired evaporation and oxidation processed occurring in the barrels.

For instance, weak (wood-wood) connections between two neighboring staves (e.g. poor contact geometry) leaves gaps between the stave joints that are held together by the conventional hoops. Further, the size of the gaps varies between the stave joints across the barrel body due to uneven force distributions in the barrel, e.g. due to the shape of the barrel, differences in curvature over the length of staves, and the wine weight distribution in the barrel.

The known hoops are fixedly riveted to the barrel body and cannot be adjusted (e.g. tightened or loosened).

Advantageously, the adjustable retaining elements therefore compensate for the uneven pressure/force distributions that exist between two adjacent staves across the barrel body. In particular, the retaining elements can individually be adjusted depending on their position on the barrel body.

It is further realized by the inventors that the sunlight improves the yeast reactivity during fermentation (resulting in a thicker yeast cell wall). In this way, strong yeast cells can be obtained in a natural way, i.e. without any additives or preservatives, and merely by improving the construction of the barrel such that the content of the barrel can be exposed to the light.

In particular, the rate of chemical reactions within the barrel can be accelerated by direct sunlight exposure thereby catalysing the yeast (or bacteria) within the barrel.

In particular, the inventors have realized that the one another major drawbacks of the traditional barrels resides in that there are (undesired) oxidation, contamination and evaporation processes that occur in the conventional barrels, for example, via the silicone bungs. In particular, the conventional bungs (e.g. silicon or cork bungs) do not provide for a proper and reliable seal which is maintained independent of the environmental temperature and/or humidity.

Advantageously, by way of the device that is mounted into the barrel in a sealing manner, the undesired processes such oxidation, contamination, and evaporation of the liquid and/or fermented content in the barrel has been eliminated or highly reduced.

Advantageously, the barrel of the present invention provides for a sustainable bioincubator which in combination with biohydrated yeast (or bacteria) facilitates the production of the wines in a controlled atmosphere, e.g. in the presence of oxygen or carbon dioxide and at a given pressure, but without any additives and preservatives.

In particular, by way of the barrel of the present invention the lifetime of the wooden barrels has been extended due to the customized and improved construction of the barrels that provides for a better sealing of the barrels with a controlled atmosphere that can be created and maintained in the barrels.

Advantageously, the barrel of the present invention can easily be regenerated with compressed gas (e.g. oxygen or air) and can be stored under pressure using gases, such as nitrogen or carbon dioxide. In this way, the preparation and storages of the barrels are improved and the growth of fungi within the empty barrels is reliably prevented.

In particular, the barrel of the present invention provides for a sealed container with the possibility to control (or adjust) the pressure inside the barrel and to eliminate (or reduce) leakage between the staves of the barrel.

Advantageously, in cases that a barrel content is rotten or spoiled, it is possible to isolate that barrel without contaminating the air in the cellar and/or risking the performance of other barrels in the cellar.

Advantageously, chemical processes including aerobic and/or anaerobic maceration, fermentation, malolactic fermentation and aging can reliably be conducted by the barrel of the present invention under continuous safe and constant positive and/or negative pressures with sunlight (or without sunlight). In particular, the amount of the fermentable foods or beverages and/or fermented content within the barrel is preserved and no further topping of new fermentable foods/beverages is required.

In particular, the inventors have realized that by applying (taking advantages) of the concept of intermolecular forces in liquids and their interface with a solid surface, it is possible to elucidate the concepts of viscosity, cohesive and adhesive forces, surface tension and capillary action in the barrels according to the present inventions.

In particular, the barrel according to the present invention advantageously makes use of the physical and chemical properties of the wood, the liquid content within the barrel and the interaction therebetween to seal the wooden channels for maintaining the barrel under pressure over a long period of time (e.g. naturally by CO₂ created as a by-product of the fermentation or other artificially by introducing food-grade gasses). However, due to the construction drawbacks of the conventional barrels (wooden or stainless steel), such advantages are not possible to be obtained by the known (conventional) barrels.

The device that is employed within the barrel of the present invention includes, for example, the device as disclosed in AU 2018203047 A1, which is incorporated herein by reference.

In particular, the retaining elements comprise hoops (e.g. a ring or a band that can be disposed around the periphery of the barrel body) and fasteners that are connected to the hoops, wherein the hoops, i.e. the size or its circumference, are configured to be adjusted by tightening, respectively loosening, the fasteners.

In particular, by individually tightening the hoops and thus selectively increasing the force applied on given staves, it is possible to reliably seal (or to minimize) the gaps between two neighboring (or adjacent) staves across the whole barrel body. This in turn, prevents (or at least highly reduces) oxygen transfer and leakage of the barrel that are caused because of the gaps and weak connections between the staves.

In particular, the hoops are fixedly connected (e.g. by way of welding or riveting) to the fasteners, e.g. bolts or any suitable adjustable fastening means. In this way, it is possible to adjust (tighten or loosen the bolts) in order to apply adjustable forces onto the different part of the staves across the barrel body.

In particular, grooved channels are formed into one side edge of the plurality of staves for receiving the second sealing elements. Advantageously, holes are formed at one end of the grooved channels for partly disposing the second sealing elements therein.

In particular, one sealing element is arranged within a grooved channel and a hole that are formed into one side edge of a corresponding stave along the longitudinal axis. In this way, the second sealing elements are reliably arranged within the grooved channels and securely held in place.

In particular, the grooved channels comprise a width corresponding to the width of the sealing element, e.g. between 2 to 4 mm and a length extending between croze grooves formed inside the barrel body.

The holes in particular have a depth of 8 to 14 mm and a diameter corresponding to the size of the sealing elements, e.g. between 2 to 6 mm.

In particular, the barrel bottom plate comprises staves that are connected together e.g. by Z finger joints. More particularly, a third sealing elements are disposed between every two neighboring staves.

In particular, the first, second and third sealing elements comprise food-grade sealants such as silicon or rubber. The sealing elements are preferably in the form of rods, bands, ribbons, straps or circular rings.

For example, the rubber materials include fluorocarbon-based fluoroelastomer (FKM) or ethylene propylene diene monomer (EPDM).

Preferably, the sealing elements have dimensions corresponding to the dimensions of the barrel body, i.e. the size of the grooved channels formed in the staves, the size of the top and bottom barrel plates. For example, the sealing elements comprise silicon rods with the diameter between 2 to 6 mm.

In particular, the window of the bottom barrel plate comprises any food-grade and transparent materials such as acrylic (acryl glass).

In particular, the barrel further comprises a lid cover that is removably disposed onto the bottom top plate to cover the window.

In particular, the first sealing element is in the form of a strap.

In particular, the opening for receiving has a diameter between 40 to 140 mm, preferably 50 mm, 110 mm or 120mm.

Advantageously, the size of the opening in the barrel body or in the barrel top or bottom plate can be optimized depending on the fermentation process, e.g. fermentation from fruits, berries and/or fruit juice.

In particular, the opening has a diameter of 50 mm for the fermentation of musts and a dimeter of 110 or 120 mm for the fermentation of mash.

In particular, the device comprises an inlet/outlet port for introducing gasses or liquids into the container. The inlet/outlet port comprises for example a conduit with a given length for introducing a given gas or liquid into a gas volume (that is built on top of the fermented liquid) or into a liquid volume of the fermented content (or liquid).

For example, it is possible that once the fermentation is finished to blend different wines and/or different fermented contents between different barrels without a risk of oxidation contamination and evaporation

In particular, the device may comprise a gas port for pressurizing, respectively depressurizing, the container e.g. with food-grade gases such as oxygen, nitrogen and/or carbon dioxide,

In particular, the device further comprises a sensor port for temperature or pressure sensors. More particularly, the sensors comprise wireless electrical sensors and/or mechanical sensors, e.g. a pressure gauge or a monometer.

In particular, the sensors are configured to communicate with a mobile device, e.g. via a wireless connection, wire connection or blue tooth.

Advantageously, the parameters such as temperature and/or pressure can precisely be monitored within the barrel throughout the fermentation and aging processes (e.g. during the wine-making process).

Advantageously, no further treatments such as clarification process (e.g. by way of flotation, cold settling, or centrifugation) are required.

In particular, the barrel further comprises a sample tap that is connected to the container in a sealing manner for introducing liquids into the container. A tube element is connected to the sample tap and extends into interior of the container such that a free end thereof is disposed in a liquid volume within the container.

Further, the barrel may comprise an adjustable pressure relief valve that is connected to the container in a sealing manner for venting excess pressures that is built inside the container.

Advantageously, laboratory and /or tasting samples can also be taken from the barrel via the sample tap without compromising the atmosphere within the barrel by exposing it to air. In particular, contrary to the conventical barrels that the bung has to be removed from the bung hole, the sampling can be conducted without risk of undesired oxidation, contamination, and evaporation of the fermented content within the barrel. For example, in cases where there is a pressure drop inside the barrel due to taken laboratory or tasting samples, a neural pressurized food-grade gas, e.g. nitrogen, can be introduced into the barrel.

In particular, the barrel further comprises an adjustable pressure relief valve (e.g. a self-release valve). Advantageously, excess pressures exceeding a given set pressure can be prevented.

In particular, the device (108) is mounted in the barrel body or in the barrel bottom or top plate.

In particular, the device is mounted in an opening formed in e.g. a central bulged area of one stave of the plurality of staves of the barrel body. Preferably, the barrel bottom plate comprises a second plurality of staves with the third sealing elements that are arranged between every two neighboring staves thereof. Alternatively, the barrel bottom plate comprises a window for viewing inside the barrel and for exposing light therein.

Further, the device may comprise an inlet/outlet port for receiving the sample tap and the first tube element in a sealing manner. Alternatively or additionally, the device futher comprises a valve port for receiving the pressure relief valve in a sealing manner. In particular, the tube element is removably connected to the sample tap, e.g. threaded or plugged-in connections.

In particular, the first tube element comprises a first tube section and a second tube section. More particularly, the first tube section is configured to be moved (or slid) in the inlet/outlet port such that it can be pulled out from the interior of the container, wherein an outer diameter of the first tube section is smaller than an inner diameter of the inlet/outlet port and an outer diameter of the second tube section is larger than the inner diameter of the inlet/outlet port. In this way, it is possible

In particular, the first tube element further comprises a perforated section that is (removably) connected to the second tube section.

In particular, the device may further comprise a filter element (e.g. a circular filter) that is exposed between the device and interior of the barrel body.

In particular, the device is mounted in an opening that is formed in the barrel bottom plate, for example in the center of the barrel bottom plate. More particularly, the barrel bottom plate comprises any suitable such as material such as metal, wood, or glass.

In particular, the barrel bottom plate further comprises an inlet/outlet port for receiving the sample tap and the therewith connected (first) tube element in a sealing manner, and a valve port for receiving the pressure relief valve in a sealing manner. Preferably a second tube element is connected to the valve port, which tube element extends into interior of the container such that a free end of the tube element is disposed in a gas volume within the container.

The second tube element comprises a first tube section and a second tube section, wherein the first and second tube sections define an angle therebetween, for example, an angle between 100 to 160 degrees. For example, the second tube element is bent.

In particular, the plurality of staves comprises wooden staves that are made from a specific type of wood selected to impart specific flavors to the fermented contents, in particular oak, acacia, ash ample, cherry, walnut or linden.

Advantageously, by way of the barrel according to the present invention, the final product can be served out of the barrel or can be filtered and/or bottled anaerobically without any additives and preservatives.

In particular, the barrel according to the present invention may further comprise a temperature element to externally adjust the temperature of the fermented content in the barrel.

Advantageously, the temperature element comprising heating and cooling mechanism in order to heat or cool the liquid inside the barrel.

In particular, the temperature element is configured to be connected to at least to one port formed in the barre, e.g. in the barrel body or the barrel bottom or top plates.

Further, it is envisaged that the temperature element to be connected to at least one of the ports of the device according to the present invention.

In particular, the temperature element comprises a closed circulation element which is configured to be cooled or heated by the flow of liquids or gasses circulating therethrough.

In particular, the object of the present invention is further achieved by a method of manufacturing a barrel for fermenting foods or beverages in a controlled atmosphere and in the absence of additives and preservatives according to independent method claim 14.

Accordingly, the method comprises the steps of:
providing a plurality of staves, wherein each stave of the plurality of staves comprises a grooved channel that is formed into a side edge of the stave;
processing the plurality of staves;
inserting a sealing element into the grooved channels of the processed staves;
assembling the plurality of staves to form a barrel body, wherein one sealing element is arranged between two neighboring staves;
disposing retaining elements around the barrel body, wherein the retaining elements are configured to be adjusted;
providing a barrel bottom plate and a barrel top plate, wherein the barrel top plate comprises a window;
disposing a further sealing element around a periphery of the barrel bottom plate and around a periphery of the barrel top plate;
connecting the barrel bottom plate and the barrel top plate (106) to free ends of the barrel body to form a container (in particular such that the further sealing elements are arranged between the croze grooves of the barrel body and the periphery of the barrel bottom and top plates);
mounting a device in an opening, formed in the barrel body (102) or in the barrel bottom plate, in a sealing manner, wherein the device (108) is configured for controlling the pressure inside the container. and for pressurizing, respectively depressurizing, the container; and
mounting a sample tap and/or a pressure relief valve in the device or the barrel bottom plate (in p particular in to corresponding ports that formed in the device and the barrel bottom plate).

In particular, the step of processing comprises the step of fire-bending the plurality of staves, wherein after the step of fire-bending the plurality of staves is toasted, and the toasted staves are deformed using compression molding.

In particular, the step of processing comprises steam-bending at least one layer of the plurality of staves, wherein each layer includes a plurality of staves required for forming a barrel body, wherein after steaming under pressure, the plurality of staves is deformed by press-molding, wherein the at least one layer is disposed between two (deformed) molds, and the deformed staves are then dried under vacuum,

In particular the deformed staves are dried using a high frequency wood drier, preferably until the staves have 7 to 10 % moisture content, optionally, the staves are subsequently toasted.

In particular, the step of deforming further comprises the step of toasting the deformed staves.

It is shown in:
- **Fig. 1**: perspective views of a barrel for fermenting foods or beverages according to the present invention, partly showing inside of the barrel and a device mounted in an opening of a barrel body;
- **Fig. 2**: perspective views of a barrel according to the present invention, partly showing inside the barrel and a device mounted in an opening of a barrel bottom plate;
- **Fig. 3**: example pictures of a plurality of staves of a barrel body according to the present invention, in a straight and deformed states;
- **Fig. 4**: example pictures of a barrel bottom plate comprising staves according to the present invention;
- **Fig. 5**: an example picture of a barrel according to the present invention;
- **Fig. 6**: a schematic diagram of a method for manufacturing a barrel according to the present invention,
- **Fig. 7**: a schematic view of a layer of the plurality of staves according to an embodiment of the deforming of the present invention;
- **Fig. 8**: a schematic view of layers of the plurality of staves according to another embodiment of the step of deforming of the present invention;
- **Fig. 9**: a schematic diagram representing the eight experimental variants,
- **Fig. 10**: example pictures of the eight experimental variants during alcoholic fermentation: in the background are the stainless steel tanks and in the foreground the barrique barrels according to the present invention;
- **Fig. 11**: Schematic views of barrels; a, b: for wine 21713c and 21713d, and c, d: for wine 21714c and 21714d; also indicating two designs of the opening for receiving the device according to the present invention;
- **Fig. 12**: results of the experiment indicating a decrease of density during alcoholic fermentation for must fermentation (variants 21713a-d);
- **Fig. 13**: results of the experiment indicating a ttemperature profile during alcoholic fermentation for must fermentation (variants 21713A-D);
- **Fig. 14**: results of the experiment indicating a decrease of density during alcoholic fermentation for mash fermentation (variants 21714A-D);
- **Fig. 15**: results of the experiment indicating a temperature profile during alcoholic fermentation for mash fermentation (variants 21714A-D); and
- **Fig. 16**: Pictures of A: Müller Thurgau 2021 in VBUNG^{®} Barrel (Variant 21713D); **B:** indicating a color change of a sterile filtered wine (Variant 21713D) [h= hours; d=days; 21713D = spontaneous fermentation in the barrel according to the present invention (VBUNG^{®} Technology).

It is shown in tables:
- **Table 1:**: Grape must analysis [calc. = calculated; n.n. = not detectable; photom: = photometrically; FOLIN = Folin-Ciocalteu] Variants: 21713A = pressureless fermentation with cultured yeast strain in stainless steel tank; 21713B = spontenous fermentation in the stainless steel tank under counterpressure; 21713C = spontaneous fermentation in the barrel according to the present invention; 21713D = spontaneous fermentation in the barrel according to the present invention; 21714A = pressureless fermentation with cultured yeast strain in the stainless steel tank; 21714B = spontenous fermentation in the stainless steel tank under counterpressure; 21714C = spontaneous fermentation in the barrel according to the present invention; 21714D = spontaneous fermentation in the barrel according to the present invention;
- **Table 2**: Wine analysis [calc. = calculated; n.n. = not detectable; photom: = photometrically; FOLIN = Folin- Ciocalteu] Variants: 21713A = pressureless fermentation with cultured yeast strain in the stainless steel tank; 21713B = spontenous fermentation in stainless steel tank under counterpressure; 21713C = spontaneous fermentation in the barrel according to the present invention; 21713D = spontaneous fermentation in the barrel according to the present invention; 21714A = pressureless fermentation with cultured yeast strain in stainless steel tank; 21714B = spontenous fermentation in the stainless steel tank under counterpressure; 21714C = spontaneous fermentation in the barrel according to the present invention; 21714D = spontaneous fermentation in the barrel according to the present invention; and
- **Table 3**: Analysis of the wine color according to LAB space (380-770nm).

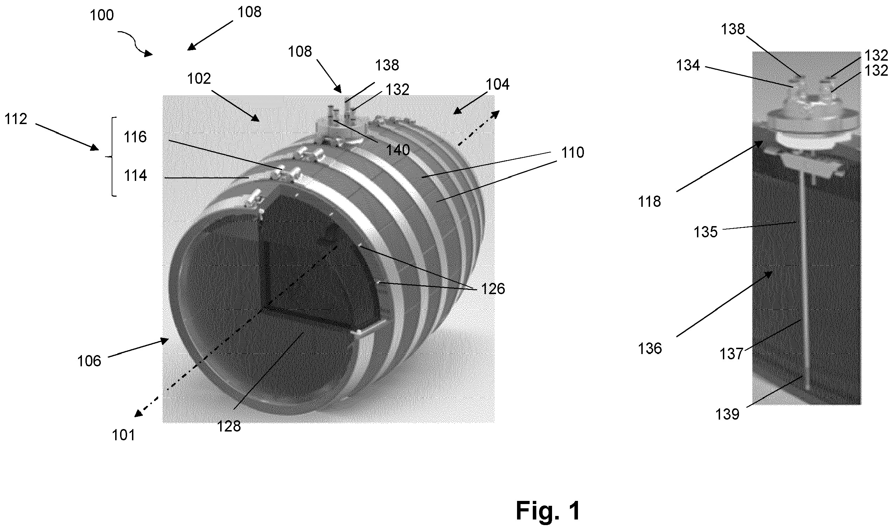

In **Fig. 1** a perspective view of a barrel 100 for fermenting foods and beverages (e.g. wine, beer, cider, spirits) according to the present invention is shown. The fermentation can be conducted using the barrel 100 in a controlled atmosphere and in the absence of any additives and preservatives.

The barrel 100 comprises a container that includes a barrel body 102, a barrel bottom plate 104 and a barrel top plate 106.

The barrel body 102 is, for example, of a cylindrical hollow shape that is connected along its longitudinal axis 101 to the barrel bottom plate 104 (at one end) and to the barrel top plate 106 (at an opposite end) in a sealing manner.

The barrel body 102 comprises a plurality of staves 110 that are securely held together by retaining elements 112.

For example, the plurality of staves 110 comprises wooden staves that are made from a specific type of wood selected to impart specific flavors to the fermented contents. In particular, the wooden staves comprise as oak, acacia, ash ample, cherry, walnut or linden.

The retaining elements 112 are configured to be adjusted for selectively (or independently) tightening, respectively loosening, the corresponding retaining elements. In this way it is possible for example to tighten a given retaining element and to selectively compensate for the pressure that exists at that area/location on the stave.

Advantageously, the adjustable retaining elements therefore compensate for uneven pressure distributions that exists between two adjacent staves along the longitudinal axis of the barrel due to, for example, the shape of the barrel, differences in curvature over the length of staves and contact geometry between the staves .

In particular, the retaining elements 112 comprise hoops 114 with fasteners (e.g. bolts) 116 that can be tightened or loosened as required. The hoops for example comprise metal or plastic hoops or any other suitable material.

In particular, first sealing elements (not shown) are arranged between the of the barrel bottom and top plates 104, 106, and the barrel body (i.e. the interior of the barrel body).

For example, the first sealing elements are arranged around peripheries 120 of the barrel bottom and top plates 104, 106.

The barrel 100 further comprises second sealing elements 126 that are arranged between two neighboring staves 110 of the barrel body 102.

In particular, the barrel top plate 106 comprises a window 128 for viewing inside the barrel 100. Advantageously, it is further possible to expose the content within the barrel 100 through the window 128 to light, e.g. sunlight.

For example, the window includes acrylic glass.
The barrel 100 further comprises a device 108 that is removably connected to the barrel body 102 in a sealing manner. The device 108 is configured for introducing gasses or liquids into the container of the barrel and for dispensing the fermented content from the container.

The device (e.g. a bunging valve system) ensures a constant bung pressure throughout the fermentation process and during storage. In particular, if the pressure inside the barrel exceeds a given set pressure, the excess gas (e.g. CO₂ gas) is released (or blown off) from the barrel 100.

The device 108 is arranged within an opening 118 (e.g. a bung hole) that is formed into one of the staves of the plurality of staves 110 (see the left side of Fig. 1) and is connected to the barrel body 102 in a sealing manner (see the right of Fig. 1).

In particular, the device for example, is of the same type as disclosed in AU 2018203047 A1, which is incorporated herein by reference.

The size of the opening 118 can be varied between 40 to 120 mm depending on the fermentation process. For example, the opening 118 has a diameter of 50 mm for the fermentation of musts and a dimeter of 110 mm for the fermentation of mash.

The device 108 comprises at least one inlet port 132 for introducing gasses (such as oxygen, nitrogen or carbon dioxide) or liquids (e.g. fruit juices) into the container.

The device 108 may further comprise a sensor port 140 for receiving temperature or pressure sensors.

The device 108 further comprises an inlet/outlet port 134 for receiving a sample tap in a sealing manner. The sample tap is connected to a tube element 136 that extends inside the container (i.e. along a transversal axis perpendicular to the longitudinal axis 101) for dispensing liquids or fermentable food and beverages from the barrel.

In particular, the first tube 136 is a stainless-steel tube that extends from the inlet/outlet port 134 on one side of the barrel body 102 to the other side of the barrel body. In this way the tube reaches the bottom of the barrel, thereby facilitating filling and emptying that barrel in a similar was as keg tanks.

Advantageously, the barrel is emptied by introducing gas (i.e. creating pressure in the barrel) and without using a pump.

The first tube element 136 comprises a first tube section 135 and a second tube section 137. The first tube section is movable in the inlet/outlet port 134 and is configured to be slide therein.

The first tube section has an outer diameter that is smaller than an inner diameter of the inlet/outlet port 134. The second tube section has an outer diameter that is larger than the inner diameter of the inlet/outlet port 134.

The device 108 further comprises an adjustable valve (a pressure relief valve) that is mounted into a valve port 138 for venting excess pressures to thereby reach a given pressure within the container.

A perforated section 129 that is removably connected to the second tube section the first tube element 136. The perforated section functions for the liquid content.

The first tube element 126 can be easily cleaned when the perforated section 129 has been removed.

The barrel may further comprise a pressure relief valve that is mounted in a valve port 138 formed in the device 108.

A second tube element may be connected to the valve port 138 which extends into interior of the container such that a free end thereof is disposed in a gas volume within the container. In this way, it is possible to introduce gasses on top of the liquid volume within the barrel.

For example, the pressure relief valve comprises a solenoid valve configured to have different pressure settings.

In particular, positive pressures within the barrel 100 can be created naturally (i.e. by CO₂) during fermentation or artificially using any food-grade gasses introduced via the inlet port 132.

Alternatively, negative pressures can be created using a vacuum system connected (not shown) to the device 108.

The pressure within the barrel 100 can be maintained or varied using, e.g. a pressure regulator.

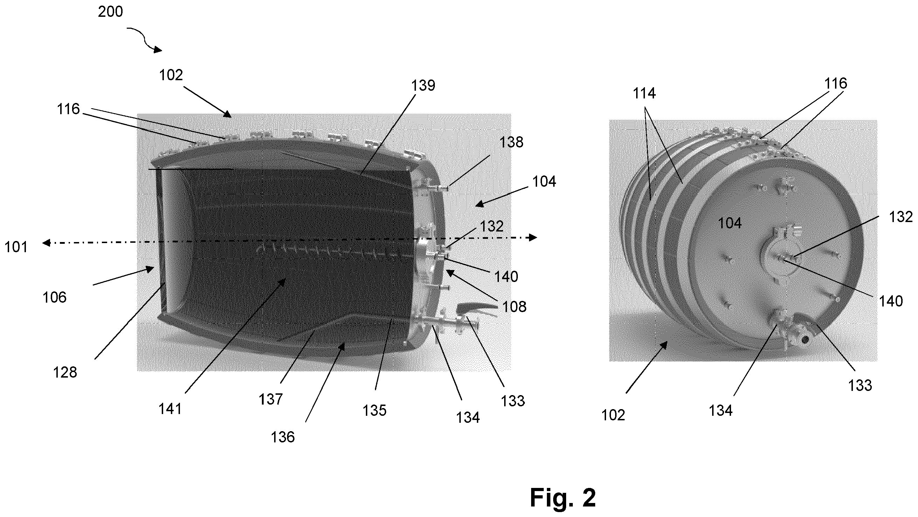

**Fig. 2** shows perspective partial views of a barrel 200 according to the present invention, partly showing inside the barrel and a device mounted in an opening of a barrel bottom plate.

The device 108 as shown in the left side of the Fig. 2 is mounted in an opening 118 formed in the barrel bottom plate 104. The opening in this example is disposed in the center of the barrel bottom plate 104.

The barrel bottom plate 104 comprise for example a metal or wooden plate.

A temperature element 141 that extends within the container of the barrel 200 is connected to the device 108.

In particular, the temperature element 141 is connected to the ports 132 of the device and comprises for example a circulation element which is configured to be cooled or heated by the flow of liquids or gassed circulating therethrough.

The temperature element may also be mounted in an opening which is formed in the barrel bottom plate or in the barrel body.

The barrel bottom plate 104 may further comprises an inlet/outlet port 134 for receiving the sample tap 133 and the therewith connected tube element 136 in a sealing manner.

In the example of Fig. 2, the first tube element 136 that is connected to the sample tap 133 comprises a first tube section 135 and a second tube section 137.

The first and second tube sections 135,137 define, for example, an angle between 100 to 160 degrees. The free end of the second tube section is disposed deeper in the liquid volume.

A valve port 138 is also provided in the barrel bottom plate 104, for example, for receiving the pressure relief valve in a sealing manner.

In this example, a second tube element 139 is connected to the valve port 138. The second tube element 139 extends into interior of the container such that a free end thereof is disposed in a gas volume within the container.

As shown in the left side of Fig. 2, the tube element is inclined towards the gas volume created on top of the liquid content of the barrel.

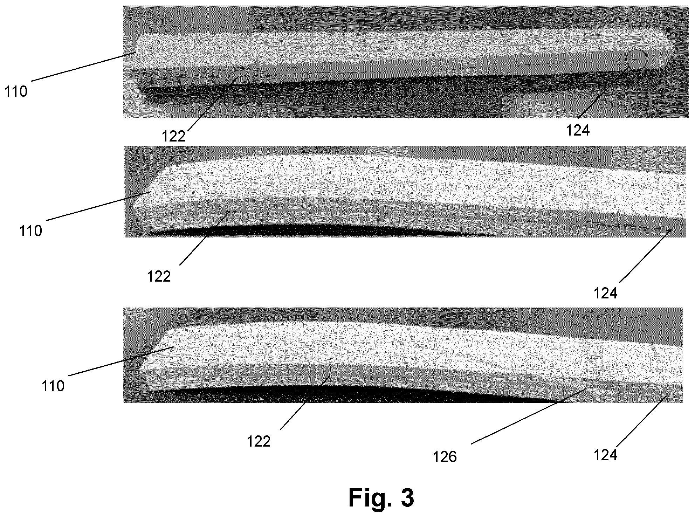

**Fig. 3** illustrates example pictures of one stave 110 of the plurality of staves used in the barrel body 102 according to the present invention.

The top picture in Fig. 3 shows a stave 110 comprising a groove channel 122 formed into a side edge thereof, and a hole 124 that is formed at one end of the grooved channel 122. In this picture the stave is straight, i.e. not deformed.

In particular, the grooved channel(s) 122 comprise(s) a width between 2 to 6 mm (e.g. 3 mm) and a length spanning between the corze grooved formed in the barrel body. The hole(s) 124 comprise(s) a depth of 8 to 14 mm (e.g. 10 mm) and a diameter between 2 to 5 mm (e.g. 3 mm).

The middle picture of Fig. 3 illustrates the stave 110 that is deformed (or bent) for forming a convex shape of the barrel body when holding the plurality of staves 110 together.

The bottom picture of Fig. 3 shows the deformed stave with a second sealing element 126 that is partly inserted in the grooved channel 122.

In particular, one end of the second sealing element 126 is inserted within the hole 124. In this way the second sealing element is reliably arranged in the grooved channel 122 and securely held in place.

In particular, the second sealing element 126 comprises a food-grade sealant, such as silicon rod.

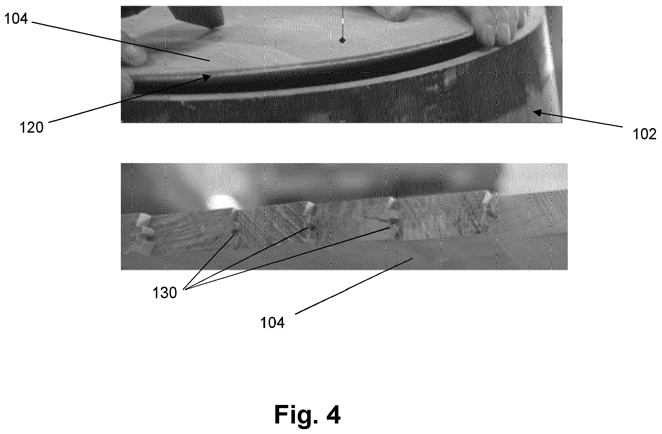

**Fig. 4** shows an example picture of a barrel bottom plate 104 according to the present invention.

The top picture of Fig. 4 partly shows the barrel bottom plate 104 and the barrel body 102. In particular, a first sealing element (not shown) is arranged around the periphery 120 of the barrel bottom plate 104 and the barrel body 102. In this way the barrel bottom plate is in a sealing engagement with the barrel body (i.e. the barrel bottom plate and the barrel body are connected in a sealing manner).

Additionally, around a periphery the barrel top plate 106 a further sealing element (i.e. a further first sealing element) is arranged for sealing the connection of the barrel top plate to the barrel body 102.

In particular, the barrel bottom plate 104 comprises staves that are held together. Similar to the plurality of staves 110 of the barrel body 102, also between two adjacent staves of the bottom barrel plate 104 a sealing element (i.e. a third sealing element, not shown) is arranged within a grooved channel 130 (e.g. the grooves of finger joints used to connect the staves in the bottom barrel plate).

The grooved channels 130 (partly shown in the bottom picture of Fig. 4) are formed into a (longitudinal) side edge of the staves of the barrel bottom plate 104.

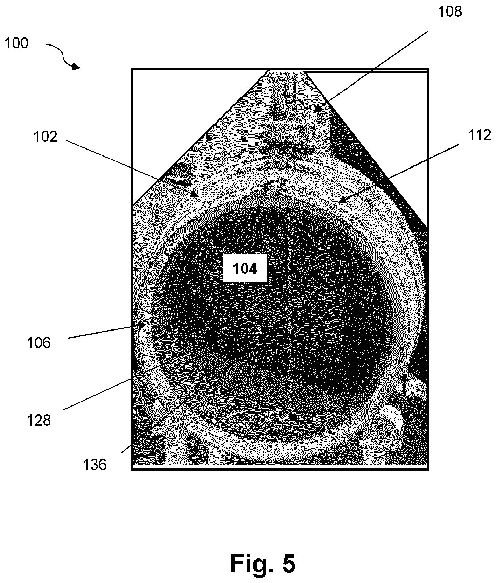

**In** **Fig. 5** an example picture of the barrel 100 according to the present in invention is shown.

The barrel 100 comprises the barrel bottom plate 104, the barrel top plate 106 that are connected to the barrel body 102.

The retaining elements 112 are arranged around an exterior of the barrel body 102 for holding the plurality of staves 110 and for forming the shape of the barrel.

The barrel top plate 106 comprises the window 128 for viewing inside the barrel 100 and for exposing the content of the barrel 100 to light, e.g. sunlight.

In particular, the barrel 100 further comprises a lid cover (not shown) that is removably disposed onto top of the bottom top plate 106 to cover the window 128 as required.

When operating the barrels according to the present invention, the fermentation starts and consumes the oxygen inside the barrel and the carbon dioxide as a byproduct of the fermentation builds up the pressure inside the barrel.

Excess pressures can be released into the atmosphere through the safety relief valve (or spunding valve). The barrel is isolated from the atmosphere and no controlling of the temperature or humidity of the environment is thus required.

The laboratory samples or tasting samples can easily be taken using the sample tap that is connected to the tube element of the device (e.g. a filter pipe). To this end, the barrel is pressurized and the sample liquid is taken without oxidation, contamination and evaporation.

Further, it is possible to introduce for example blend juices or fermented juices into the barrel via the inlet ports of the devices. Also compressed gasses (such as CO₂, N₂, Ar or any food-grade gasses allowed in the beverage industry) can easily be introduced into the barrel via the inlet ports of the device.

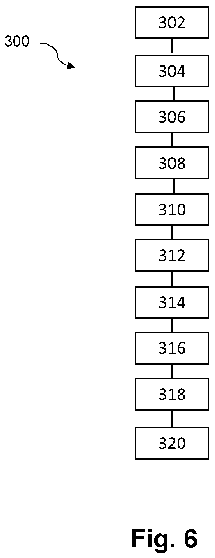

**Fig. 6** shows a schematic diagram of a method 300 of manufacturing a barrel 100, 200 for fermenting foods or beverages in a controlled atmosphere and in the absence of additives and preservatives according to the present invention.

The method 300 of manufacturing a barrel 100 for fermenting foods or beverages, e.g. a wooden wine barrel, comprises the steps of
- providing 302 a plurality of staves, wherein each stave of the plurality of staves 110 comprises a grooved channel 122 that is formed into a side edge of the stave 110;
- processing (304) the plurality of staves 110;
- inserting 306 a sealing element into the grooved channels 122 of the processed staves;
- assembling 308 the plurality of staves 110 to form a barrel body 102, wherein one sealing element is arranged between two neighboring staves;
- disposing 310 retaining elements 112 around the barrel body 102, wherein the retaining elements are configured to be adjusted;
- providing 312 a barrel bottom plate 104 and a barrel top plate 106, wherein the barrel top plate 106 comprises a window 128;
- disposing 314 a further sealing element around a periphery (120) of the barrel bottom plate 104 and around a periphery 120 of the barrel top plate 106;
- connecting 316 the barrel bottom plate 104 and the barrel top plate 106 to free ends of the barrel body 102 to form a container;
- mounting 318 a device 108 in an opening 118, formed in the barrel body 102 or in the barrel bottom plate 104, in a sealing manner, wherein the device 108 is configured for controlling the pressure inside the container and for pressurizing, respectively depressurizing, the container.
- mounting 320 a sample tap and/or a pressure relief valve in the device or in the barrel bottom plate 108.

The plurality of staves is of different dimensions that are appropriately sized and shaped to fit together and to form a desired shape of the barrel.

The barrel body 102 and the barrel bottom plate 104 comprise a plurality of staves (e.g. wooden staves) that are cut in the form of longitudinal slabs, wherein the staves of the barrel bottom plate 104 are shorter than the staves of the barrel body 102.

The plurality of shorter staves is connected, e.g. through Z ginger joints, together and cut to form e.g. a circular barrelhead.

The plurality of (longer) staves is held together by the retaining elements 112 including loops and bolts. The bolts are adjustably tightened to apply a uniform force on the plurality of staves (i.e. across the barrel body 102).

In particular, the step of deforming 304 comprising the step of fire-bending of the plurality of staves 110, wherein after the step of fire-bending, the plurality of staves is toasted, e.g. a toasting process including light toast medium toast, medium plus toast or heavy toast. The toasted staves are then compressed using compression molding.

Alternatively, the step of deforming comprises the step of steam-bending the plurality of staves 110, and deformed by press-molding using a deformed mold 142 and a press 144. Thereafter, the deformed staves are dried under vacuum until they have about 7 to 10% moisture content.

In particular, the staves reached between 15-22 % moisture content before press bending. The staves are steamed in steam chambers for 1-2 minutes for each millimeter thickness of the stave.

The staves are bent all at once using curved molds in multiple layers. In particular, by having different heating systems at the bottom surface of the molds different heating profiles can be achieved as desired.

The staves are dried back to 7-10% moisture content using radio frequency drying equipment or in heating chambers. The curved shape of the staves is maintained at this moisture content.

In particular, the deformed staves are dried using a high frequency wood drier.

In particular, the step of deforming further comprises the step of toasting the deformed staves.

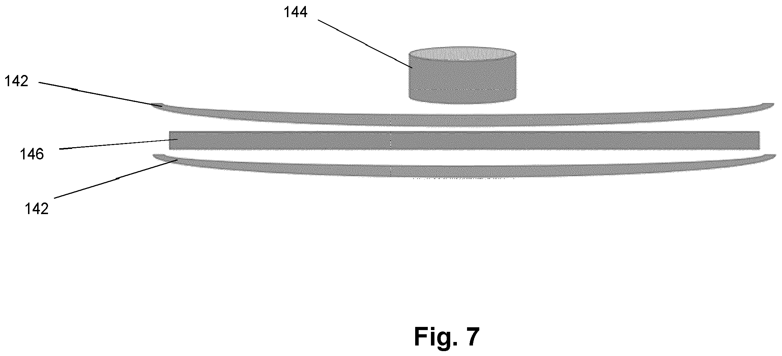

**Fig. 7** shows schematically a layer 146 that includes the plurality of staves 110 required to form one barrel body 102. The layer 146 is arranged between two deformed mold 142. The press 144 is disposed onto the upper mold 142.

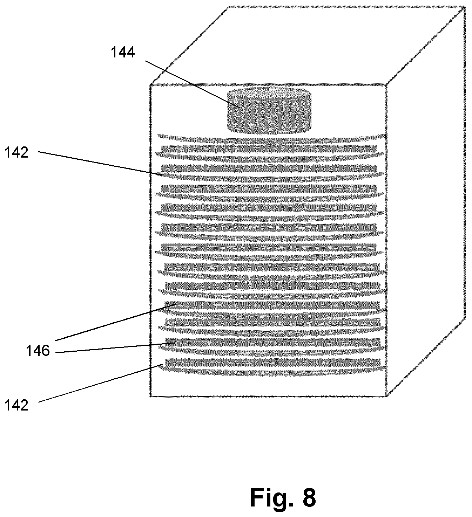

**Fig. 8** shows schematically another embodiment of the present invention. In particular, it is possible to conduct the step of steam-bending simultaneously for different layers 146 of the plurality of staves. The layers 146 are stacked on top of each other with one (deformed) mold 142 disposed between every two layers 146. The press 144 is arranged/applied und the upper-most mold 142.

The steam-bending process includes steaming the staves for e.g. an hour to reach 15-22% moisture; disposing curved molds between layers (and also at under the bottom and top most layer).

In particular the bottom part of the curved mold has heating system that can toast the wooden staves. The top part of the curved mold 142 is insulated and thus doesn't toast the outside part of the wooden staves on the other layers. The staves are toasted only the interior inside of the barrel. Thereafter, the staves are dried in vacuum and heated using e.g. a high frequency wood drier, until the moisture content of the staves is about 7%

### MATERIAL AND METHODS

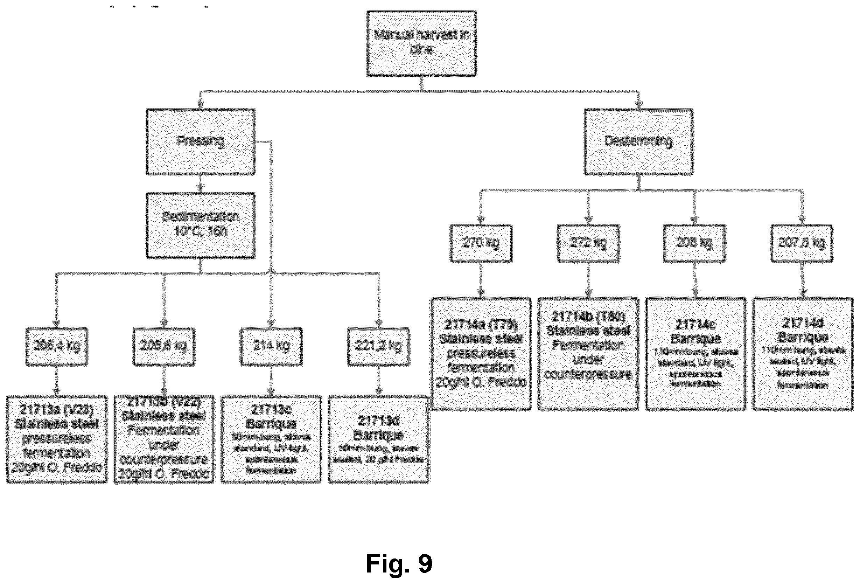

The experiments were carried out with white wine from the Müller Thurgau grape variety. The health of the grapes was good with a botrytis infestation of 3%. The grapes were harvested by hand on 28.09.2021 in the Geisenheimer Fuchsberg site (Eibinger Weg, test area E6) and transported to the winery in standardized vats with a capacity for 450 kg of grapes. The grapes were vinified in eight different ways as shown in **Fig. 9****.**

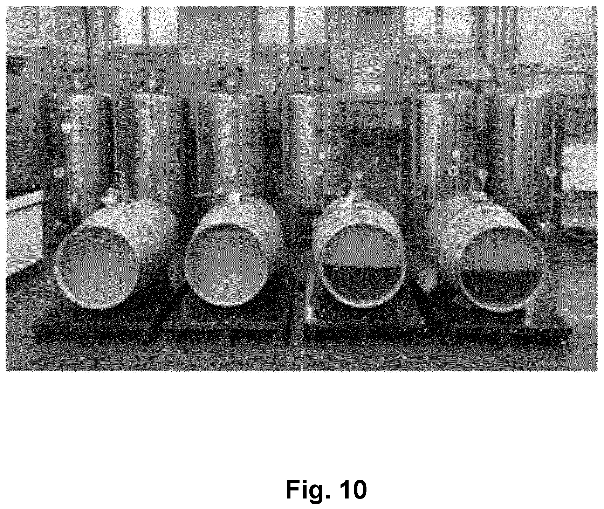

**Fig. 10** shows pictures of the eight variants during alcoholic fermentation. The stainless steel tanks are in the backrow and the barrels of the present invention in the fron5 row.

The first half of the grapes were pressed directly in a semi-open tank press (Flath, FWP, built in 2016) with a basket capacity of 1,800 I, the press was loaded by gravity. Then, the must was filled directly into new barriques (199 I must/barrique) without the need being pre-clarified and without the addition of SO₂ (variant 21713c and 21713d). The subsequent spontaneous fermentation in barriques (Slavonian oak, origin Croatia, medium toast, Tonnellerie Auric) took place under a counter-pressure of 0.8 bar overpressure. During fermentation, the acrylic barrel heads of variants 21713 C, 21714C and 21714D were not covered and exposed to sunlight as the barrels were stored outside. After completion of the alcoholic fermentation, the wine was stored outdoors in barriques under a CO₂ atmosphere of 0.8 bar overpressure at cool, wintry temperatures.

Another part of the same batch of must was pre-clarified by sedimentation for 16 h at 10°C and fermented in stainless steel tanks with pure cultured yeast (20 g/hl Oenoferm Freddo, Erbslöh). For the variant 21713A a pressureless fermentation was conducted and for variant 21713B and 21713D the must was fermented under a counter-pressure of 0.8 bar overpressure. All fermentations were conducted without temperature control.

The second half of the grapes were destemmed and fermented on the skins. For these wines, the berries were separated from the stalks with a drum destemmer (Amos, built in 1988) and the mash was filled by gravity in new barriques equipped with the technology of the present invention (i.e. VBUNG^{®} technology). The fermentation on the skins took place spontaneously under a counter-pressure of 0.8 bar overpressure (variants 21714C and 21714D). After completion of alcoholic fermentation the wines aged outdoors in the barriques without SO₂ addition and under CO₂ overpressure of 0.8 bar. The variants 21714A and 21714B were fermented in stainless steel tanks, with the first variant (21714A) being added a pure culture yeast (20 g/hl Oenoferm Freddo, Erbslöh) and fermented without counterpressure and the second variant (21714B) was fermented spontaneously under a counterpressure of 0.8 bar.

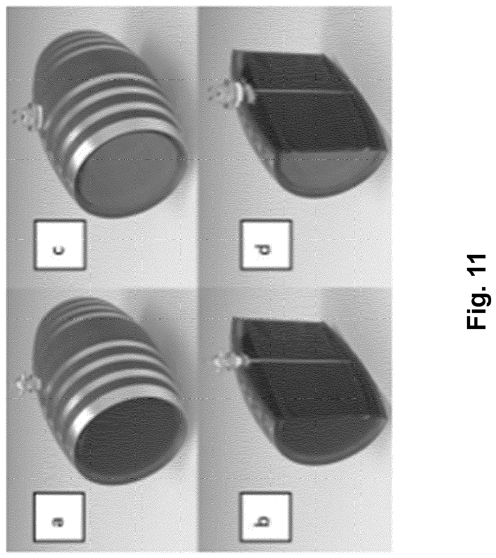

In **Fig. 11** two different designs of the bunghole is shown. For fermentation of must the diameter is 50 mm and for fermentation of mash 110 mm.

The barrels according to the present technology differ from the standard barrels due to the several features, such as:
1. a sealing element (e.g. silicone gasket) that is inserted between the staves, sealing them against each other and reducing gas exchange between the staves,
2. a transparent window (e.g. an acrylic plate) that is inserted into one head side of the barrel,
3. The bunghole is equipped with a bunging valve that can be precisely adjusted to the desired opening pressure. The bunging valve ensures a constant bung pressure throughout the fermentation process and during storage. If the pressure inside the barrel exceeds the set pressure, the excess CO₂ is blown off.
4. A metal tube (e.g. stainless-steel tube) that reaches from the bunging valve to the bottom of the barrique and allows the barrique to be filled and emptied in the same way as keg tanks. This has a further advantage that the step of emptying can be done by gas pressure and therefore no pump is not necessary.

### Must and Wine analysis

The turbidity was determined with a turbidity photometer (Dr Lange, Nephla LPG 239). The yeast- available nitrogen content (N-OPA) was determined enzymatically (Megazyme, Primary amino nitrogen kit). The grape must and wine was analyzed by FTIR analysis (FOSS, WineScan SO2). During alcoholic fermentation, density and temperature were determined daily with a density meter (Metler Toledo, DensitoPro). Yeast propagation was monitored microscopically. Total phenolic content was determined using the Folin-Ciocalteu method (SINGLETON et al., 1999). Flavonoid content was determined by colorimetric determination of catechin content in must and wine using dimethylaminocinnamaldehyde (DAC) solution of the Institute of Oenology, cf. (ZIRONI et al., 1992; SCHNEIDER, 1995; SCHNEIDER and KOST, 2020). The color of the samples was recorded using a spectrophotometer (photoLab, 7600 UV-VIS), measuring absorbance over a wavelength range from 380 nm to 770 nm in 10 nm steps. Values characterizing the color were calculated from the measured values. In addition to the standard color values XYZ, these are the values of the L*a*b* color space, also called CIELab color space.

### Results and Discussion

The must analysis of the eight different variants as outlined in **Table 1** shows no differences between the must variants (21713) and mash fermentation variants (21714). Only the must turbidity for the variant 21713C was much higher (913 NTU) in comparison to the three other must fermentation variants (21713A, B, D). This can be explained by the fact that no must clarification was performed for this variant. Usually, winemakers target turbidity values of 100 - 200 NTU after clarification for the fermentation of white musts. The analytical values regarding sugar content and composition of organic acids are comparable, which means that the grape and must quality were homogenous among the different variants. The total phenolic contents are slightly increased for the mash fermentation variants in wooden barrels compared to stainless steel tanks. This is probably due to the somewhat more difficult filling of the barrels and the associated increased mechanical stress on the berries.

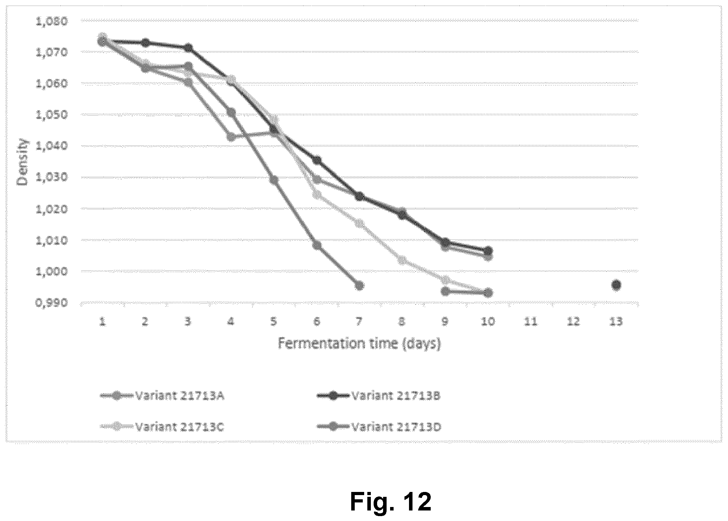

Turning now to **Figs. 12-15****,** the fermentation curves of the individual variants are shown.

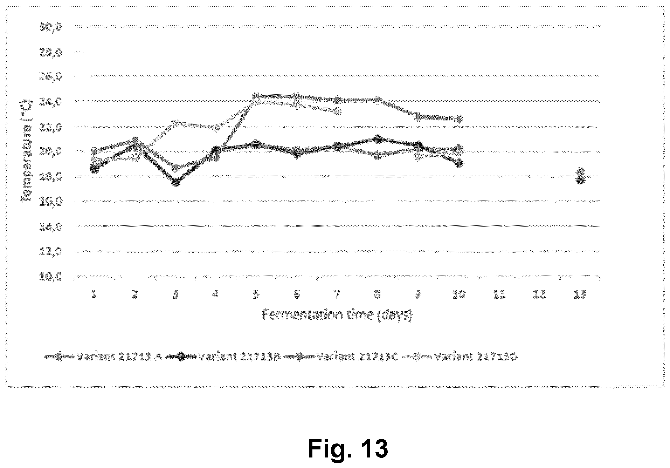

In **Figs. 12** and **13** the sample 21713A represent a pressureless fermentation with cultured yeast strain in stainless steel tank; the sample 21713B represents a spontenous fermentation in stainless steel tank under counterpressure; the sample 21713C represents a spontaneous fermentation in barrique VBUNG^{®}; and the sample 21713D represent a spontaneous fermentation in barrique VBUNG^{®}].

For the must fermentation variants (21713), the musts fermented at slightly higher temperatures of about 3°C in the barrique barrels compared to the two variants in the stainless steel tank, which could be explained by a lower heat radiation through the wood. It resulted in a faster fermentation process for variants 21713C and21713D.

The wines fermented in the barrel completed the alcoholic fermentation three days earlier in comparison to the wines fermented in the stainless steel tanks.
It is interesting to mention that the must that fermented spontaneously fermented faster than the two variants with the cultured yeast strains.

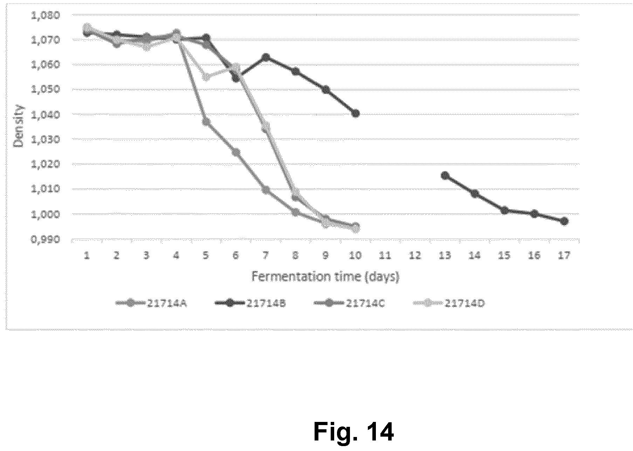

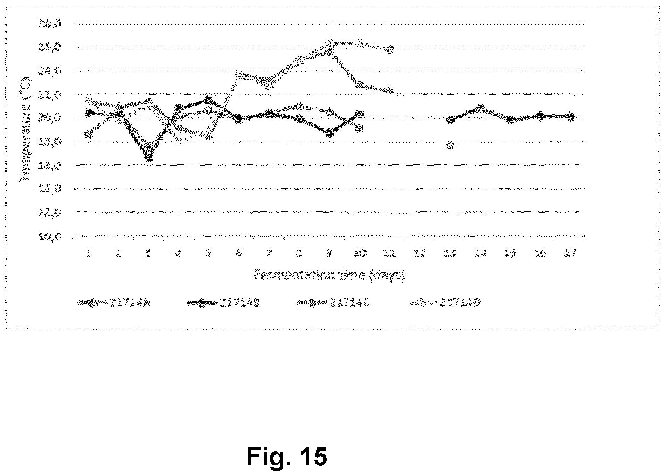

During the microscopic control, it was noticed that the yeasts from the variants exposed to sunlight (21713C, 21714 C+D) during fermentation had a thicker yeast cell wall compared to the yeast cells from variant (21713D) and the stainless steel tank variants. In **Figs. 14** and **15** the sample 21714A represents a pressureless fermentation with cultured yeast strain in stainless steel tank; the sample 21714B represents a spontenous fermentation in stainless steel tank under counterpressure; the sample 21714C represents a spontaneous fermentation in barrique VBUNG^{®}; and the sample 21714D represents a spontaneous fermentation in barrique VBUNG^{®}.

The alcoholic fermentation of the four variants fermented on the skins (21714) was more heterogeneous. The fermentation of the three variants 21714 A, C and D was completed within 10 days. In the case of the 21714B variant, fermentation got stuck, which meant that the sugar did not ferment completely. This variant was not investigated further in the subsequent vinification (see **Fig. 14**).

The fermentation temperature of the wines in the barrique barrels was about 5 °C higher than the wine in the stainless steel tanks during the main fermentation phase (see **Fig. 15**).

In **Table 2** the results of the young wine analysis are indicated. Accordingly, the analysis shows comparable values for the seven variants. The variants 21714C and 21714D contain 2,8 and 2,4 g/L of residual sugar, respectively. However, a later analysis showed no more residual sugar (results not published). The degradation of malic acid and low levels of lactic acid indicate an ongoing maloclatic fermentation.

The must variants from the barrique barrel (the barrel according to the present invention) were already protein-stable shortly after the end of fermentation (heat test Δ NTU < 1) and showed no need for bentonite. Possibly, tannins from the oak reacted with thermolabile proteins to form tannin-protein complexes and flocculated them. This effect was not observed in the mash fermented variants.

During vinification, the wines were regularly sensory tasted by five scientists. A sensory tasting with a larger panel did not take place.

A sensory tasting of the young wines showed that the wines from the stainless steel tanks exhibited reductive aromas probably caused by hydrogen sulfide (H₂S) and were rated worse overall than the wines that fermented in the barriques. The primary aroma was masked by the reductive aromas.

Surprisingly, the wines from the (barriques) barrels did not show any reductive aromas. These wines did not show the typical bouquet of young wine, but were rated as ready to drink and the flavor was described as a wine flavor that establishes to a minimum of 3 to 6 months aging for traditional winemaking. The wines fermented in the barrels were characterized by a pronounced primary aroma. The carbonic acid overpressure of 0.8 bar at 20°C was not sensory perceptible, and the wines did not show an increased amount of carbonic acid in taste.

The clarification of the wines of the variants 21713C and 21713D started very quickly after the alcoholic fermentation was completed.

The wines fermented in the barrels were visually almost bright for 14 days after the end of fermentation.

All the must fermented wines had a comparable color and did not show any oxidation or browning hues in terms of color (see **Table 3**). All variants fermented on the skins were described as slightly bitter and astringent. The wine color was somewhat more intense compared to the must variants, but did not exhibit the typical orange, amber color of mash-fermented white wines (see **Table 3**).

Variants 21713C and 21713D were tasted regularly over a period of 11 months and the wines were characterized by an intense fresh primary aroma. Oxidative notes and aromas of free acetaldehyde could not be detected.

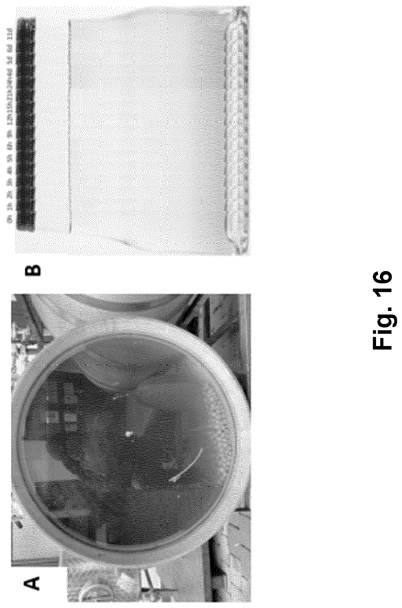

The mash fermented wines reacted violently with air contact. Already after a few hours air contact, the wines developed an intense brown coloration and the aroma changed to strongly oxidative. This phenomenon is probably explained by the oxidation of flavonoid phenols. The content of flavonoid phenols in the mash-fermented wines was elevated and ranged between 69.5 and 75.8 mg/L. (Schneider et al., INTERNAT. JOURNAL OF VITICULTURE AND ENOLOGY, 2021, N. 6/3) reports values of below 20 mg/L catechin/epicatechin from 858 white wines from all over the world. This includes a large-scale test with 664 wines, in which the mean values of flavanols across all grape varieties are below 6 mg/L. Cooling the mash fermented wine to -4°C for 24 hours followed by a sterile filtration prevented the brown coloration (results not shown). This heavy oxidation reaction did not occur in the wines fermented as must fermented in barrique as shown in **Fig. 16**.

The left-side picture A of **Fig. 16** shows Müller Thurgau 2021 in VBUNG^{®} Barrel (Variant 21713D n the right-side picture B of **Fig. 16** shows the color change of sterile-filtered wine (Variant 21713D) [h= hours; d=days; 21713D = spontaneous fermentation in barrique VBUNG^{®}].

### Conclusion

The first tests on the use of VBUNGO technology in the barrels showed that this technology allows the production of wines without additives and processing aids, which are sensorially comparable to conventionally produced wines. The early drinking maturity of the wines produced in wooden barrels with VBUNGO was remarkable in contrast to the variants fermented in stainless steel tanks, but also in contrast to conventionally produced wines, which often require 3-6 months of wine maturity until the fermentation aroma is integrated to such an extent that it no longer dominates the wine aroma.

After pressing the grapes and transferring the must to the barrels, no further technology is required for vinification. Pumping of the wine is not necessary, because the wine transfer is done by gas pressure. Regular topping up of the barrels is not necessary, as the bung is gas tight sealed. The headspace in the barrel consists of either carbon dioxide or nitrogen gas and the absence of oxygen means that no microbial or chemical oxidation reactions harmful to the wine take place. The wines can be tapped directly from the barrel by gas pressure, but filtration and bottling with gas pressure are also possible.

Even after eleven months of aging in partial filled barrels, these white wines showed no oxidation aromas, despite the absence of SO2. Bottled wines also showed no unusual flavors over a period of six months and were rated as positive. The wines should be bottled under low-oxygen filling conditions to prevent the onset of undesirable oxidation processes. Longer wine aging periods have not yet been observed.

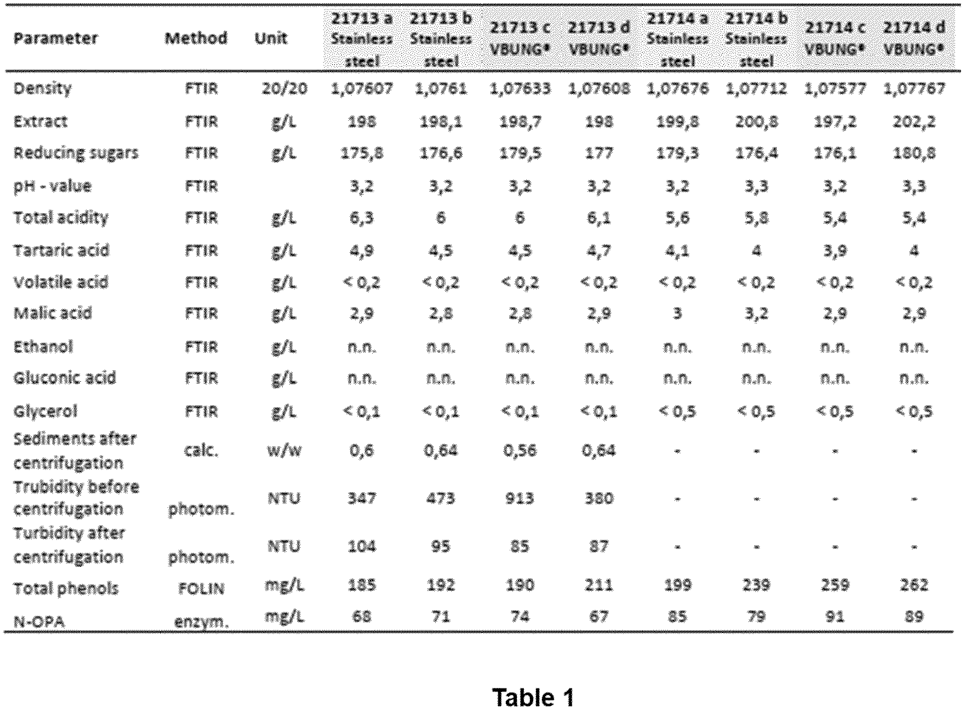

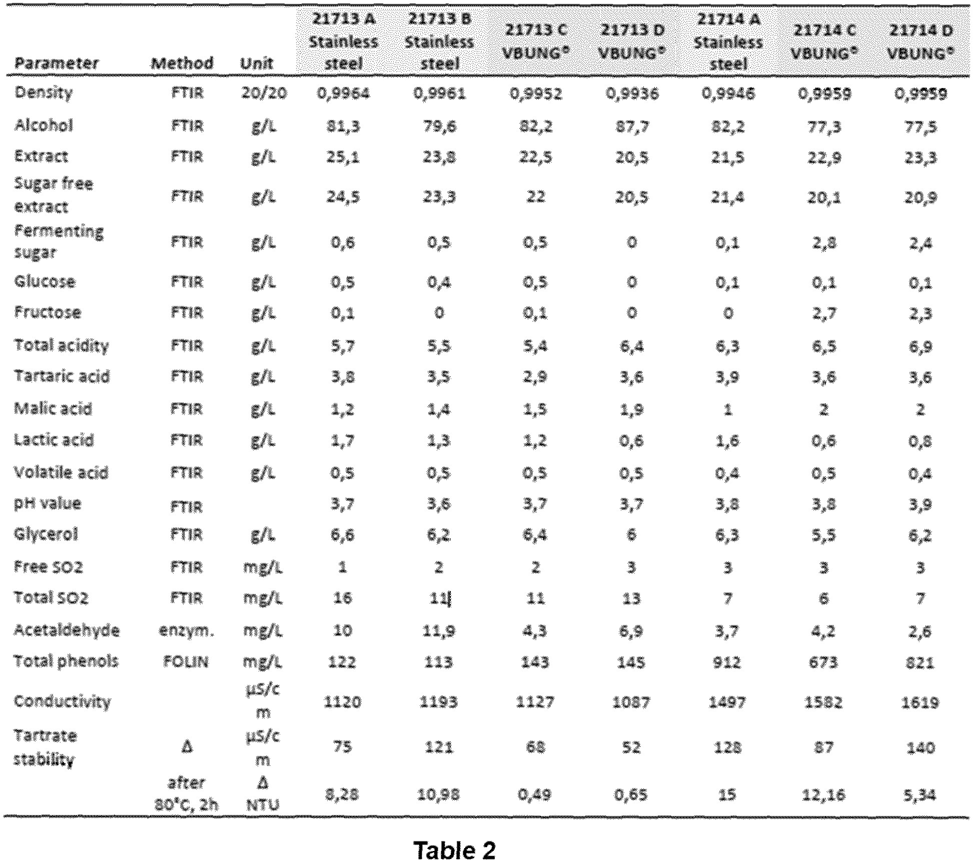

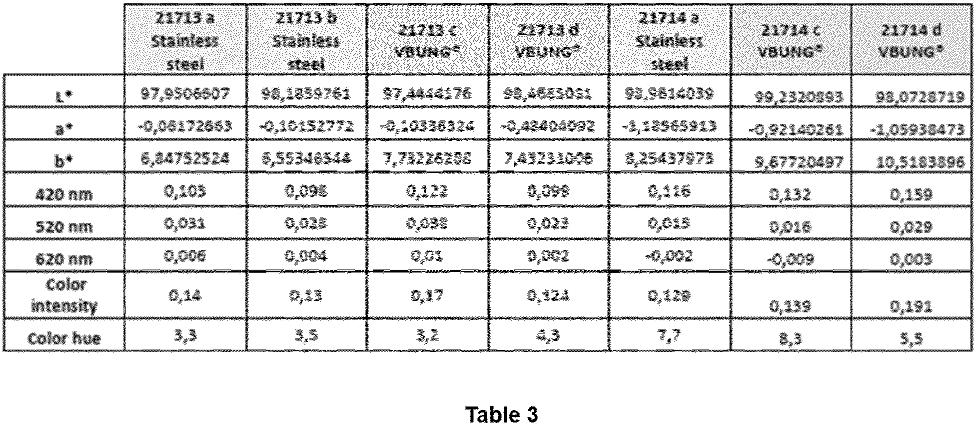

### REFERENCE NUMERALS

- 100: a barrel
- 101: a longitudinal axis
- 102: a barrel body
- 104: a barrel bottom plate
- 106: a barrel top plate
- 108: a device
- 110: a plurality of staves
- 112: retaining elements
- 114: (a) hoop(s)
- 116: (a) fastener(s)
- 118: an opening
- 120: a periphery of the barrel bottom or top plate
- 122: (a) grooved channel(s) of the plurality of staves of the barrel body
- 124: (a) hole(s) on the side edge of the plurality of staves of the barrel body
- 126: (a) second sealing element(s)
- 128: a window
- 129: a perforated section
- 130: (a) grooved channel(s) of the staves of the barrel bottom plate
- 132: an inlet port
- 134: an inlet/outlet port
- 135: a first tube section
- 136: a first tube element
- 137: a second tube element
- 138: a valve port
- 139: a second tube element
- 140: a sensor port
- 141: a temperature element
- 142: a (deformed) mold
- 144: a press
- 146: (a) layer(s) including a plurality of staves
- 200: a barrel
- 300: a method for manufacturing a barrel
- 302: a method step
- 304: a method step
- 306: a method step
- 308: a method step
- 310: a method step
- 312: a method step
- 314: a method step
- 316: a method step
- 318: a method step
- 320: a method step

## Claims

1. A barrel (100, 200) for fermenting foods or beverages in a controlled atmosphere and in the absence of additives and preservatives,
the barrel (100) comprising:
a container including a barrel body (102), a barrel bottom plate (104) and a barrel top plate (106), wherein the barrel body (102) comprises a plurality of staves (110) and is connected along a longitudinal axis (101) to the barrel bottom plate (104) and the barrel top plate (106) in a sealing manner,
a device (108) connected to the container in a sealing manner, wherein the device (108) is configured to control the pressure inside the barrel and to pressurize, respectively depressurize, the barrel;
retaining elements (112) arranged around the barrel body (102) along the longitudinal axis (101), wherein each of the retaining elements (112) are configured to be adjusted;
first sealing elements arranged between the barrel body (102) and the barrel bottom and top plates (104, 106), wherein the barrel top plate (106) comprises a window (128) for exposing light into the barrel (100); and
second sealing elements (126) arranged between every two neighboring staves of the plurality of staves (110) of the barrel body (102).

2. The barrel (100, 200) according to claim 1,
**characterized in that**
the retaining elements (112) comprise hoops (114) and fasteners (116) connected to the hoops (114),
wherein the hoops (114) are configured to be adjusted by tightening, respectively loosening, the fasteners (116).

3. The barrel (100, 200) according to claims 1 or 2,
**characterized in that**
grooved channels (122) formed into one side edge of the plurality of staves (110) for receiving the second sealing elements (126), preferably, holes (124) are formed at one end of the grooved channels for partly disposing the second sealing elements (126) therein.

4. The barrel (100, 200) according to any of the preceding claims,
**characterized in that**
the device (108) comprises at least one inlet port (132) for introducing gasses or liquids into the container, and/or a sensor port (140) for temperature or pressure sensors.

5. The barrel (100, 200) according to any of the preceding claims,
**characterized in that**
the barrel (100, 200) further comprises
a sample tap (133) that is connected to the container in a sealing manner for introducing liquids into the container,
a first tube element (136) that is connected to the sample tap and extends into interior of the container such that a free end thereof is disposed in a liquid volume within the container; and
an adjustable pressure relief valve that is connected to the container in a sealing manner for venting excess pressures from the barrel.

6. The barrel (100, 200) according to any of the preceding claims,
**characterized in that**
the device (108) is mounted in the barrel body (102) or in the barrel bottom plate (104).

7. The barrel (100) according to claim 6,
**characterized in that**
the device (108) is mounted in an opening (118) formed in a bulged area of one stave of the plurality of staves (110) of the barrel body (102).

8. The barrel (100) according to 7,
**characterized in that**
the device (108) comprises
an inlet/outlet port (134) for receiving the sample tap (133) and the therewith connected first tube element (136) in a sealing manner, and/or
a valve port (138) for receiving the pressure relief valve in a sealing manner.

9. The barrel (100) according to claim 8,
**characterized in that**
the first tube element (136) comprises a first tube section (135) and a second tube section (137), wherein the first tube section is configured to be moved in the inlet/outlet port (134), and wherein an outer diameter of the first tube section is smaller than an inner diameter of the inlet/outlet port (134) and an outer diameter of the second tube section is larger than the inner diameter of the inlet/outlet port (134).

10. The barrel (100) according to claim 9,
**characterized in that**
the first tube element (136) further comprises a perforated section (129) that is connected to the second tube section (137).

11. The barrel (200) according to claim 6,
**characterized in that**
the device (108) is mounted in an opening (118) formed in the barrel bottom plate (104), in particular in the center of the barrel bottom plate (104).

12. The barrel (200) according to claim 11,
**characterized in that**
the barrel bottom plate (104) further comprises
an inlet/outlet port (134) for receiving the sample tap and the therewith connected tube element (136) in a sealing manner, and
a valve port (138) for receiving the pressure relief valve in a sealing manner, preferably a second tube element (139) is connected to the valve port (138) and extends into interior of the container such that a free end thereof is disposed in a gas volume within the container.

13. The barrel (200) according to claim 12,
**characterized in that**
the first tube element (136) comprises a first tube section (135) and a second tube section (137), wherein the first and second tube sections define an angle therebetween, preferably the angle between the first and second tube sections includes 100 to 160 degrees.

14. A method (300) of manufacturing a barrel (100, 200) for fermenting foods or beverages in a controlled atmosphere and in the absence of additives and preservatives according to any of the preceding claims, the method comprising the steps of: providing (302) a plurality of staves, wherein each stave of the plurality of staves (110) comprises a grooved channel (122) that is formed into a side edge of the stave (110);
processing (304) the plurality of staves (110);
inserting (306) a sealing element into the grooved channels (122) of the processed staves;
assembling (308) the plurality of staves (110) to form a barrel body (102), wherein one sealing element is arranged between two neighboring staves; disposing (310) retaining elements (112) around the barrel body (102), wherein the retaining elements are configured to be adjusted;
providing (312) a barrel bottom plate (104) and a barrel top plate (106), wherein the barrel top plate (106) comprises a window (128);
disposing (314) a further sealing element around a periphery (120) of the barrel bottom plate (104) and around a periphery (120) of the barrel top plate (106); connecting (316) the barrel bottom plate (104) and the barrel top plate (106) to free ends of the barrel body (102) to form a container;
mounting (318) a device (108) in an opening (118), formed in the barrel body (102) or in the barrel bottom plate (104), in a sealing manner, wherein the device (108) is configured for controlling the pressure inside the container;. and for pressurizing, respectively depressurizing, the container; mounting (320) a sample tap and/or a pressure relief valve in the device or in the barrel bottom plate (108).

15. The method (300) of manufacturing a barrel (100) according to claim 14,
**characterized in that**
the step of processing (304) comprises the step of fire-bending the plurality of staves (110), wherein after the step of fire-bending the plurality of staves is toasted, and the toasted staves are deformed using compression molding.

16. The method (300) of manufacturing a barrel (100) according to claim 14,
**characterized in that**
the step of processing (304) comprises steam-bending at least one layer (146) of the plurality of staves, wherein each layer (146) includes a plurality of staves for forming a barrel body,
wherein after steaming under pressure, the plurality of staves (110) of the at least one layer is deformed by press-molding, wherein the at least one layer (146) is disposed between two molds (142), and
the deformed staves are then dried under vacuum, the deformed staves are dried using a high frequency wood drier, preferably until the staves have 7 to 10 % moisture content,
optionally, the staves are subsequently toasted.
